# EUROPÄISCHE PATENTSCHRIFT

(11) **EP 1 925 587 B1**
(45) Veröffentlichungstag und Bekanntmachung des Hinweises auf die Patenterteilung: **27.05.2009**
(21) Anmeldenummer: 07020755.0
(22) Anmeldetag: 24.10.2007
(51) Int. Cl.: B66F 9/06, H01R 13/52

(54) **Anordnung eines Servicesteckers bzw. einer -steckbuchse im Gehäuse eines Flurförderzeugs**
Assembly for a service connector or a service slide-on receptacle in the housing of an industrial truck
Agencement d'un commutateur de service ou d'une fiche femelle dans le boîtier d'un chariot de manutention

(30) Priorität: 23.11.2006 DE 102006055250
(43) Veröffentlichungstag der Anmeldung: 28.05.2008
(73) Patentinhaber: Jungheinrich Aktiengesellschaft, 22047 Hamburg (DE)
(72) Erfinder: Knie, Andreas, 22769 Hamburg (DE); Nagel, Markus, 20146 Hamburg (DE)
(74) Vertreter: Hauck Patent- und Rechtsanwälte

(56) Entgegenhaltungen:
- EP-A- 1 598 913
- GB-A- 1 528 891
- US-A- 6 101 433
- US-A- 6 104 099

## Beschreibung

Die Erfindung bezieht sich auf eine Anordnung eines Servicesteckers bzw. einer steckbuchse im Gehäuse eines Flurförderzeugs nach dem Oberbegriff des Patentanspruchs 1.

Flurförderzeuge mit elektrischen bzw. elektronischen Komponenten weisen üblicherweise einen sogenannten Servicestecker bzw. eine Servicesteckbuchse auf. Dieser bzw. diese bilden eine Schnittstelle für eine externe Verbindung mit den elektrischen bzw. elektronischen Komponenten, insbesondere zu Diagnose- und Testzwecken. Derartige Schnittstellen sollen zum einen leicht zugänglich sein, zum anderen jedoch möglichst nicht verschmutzen oder durch Spritzwasser korrodieren.

Daher liegt der Erfindung die Aufgabe zugrunde, eine Anordnung eines Servicesteckers bzw. einer -steckbuchse für das Gehäuse eines Flurförderzeugs zu schaffen, welche einerseits einen sicheren mechanischen Schutz bietet und andererseits einen Schutz gegen das Eindringen von Flüssigkeit und Verunreinigungspartikeln. Ferner soll ein Schutz gegen ungewolltes Öffnen und dadurch gegen fahrlässige oder mutwillige Beschädigung der Schnittstelle erreicht werden.

Diese Aufgabe wird durch die Merkmale des Patentanspruchs 1 gelöst.

Bei der erfindungsgemäßen Anordnung ist die Steckbuchse bzw. der Stecker am Boden einer fachförmigen Vertiefung an einer Seite des Gehäuses, des Flurförderzeugs vorzugsweise an der Oberseite angeordnet. Eine gummielastische Kappe ist komplementär zum Querschnitt der Vertiefung geformt und annähernd formschlüssig in die Vertiefung einsetzbar. Dadurch läßt sich wirksam das Eindringen von Flüssigkeit und Partikeln verhindern. Auch ein ungewolltes Öffnen der Abdeckung wird durch die Kappe verhindert, die vorzugsweise mehr oder weniger versenkt in der Vertiefung einsitzt. Auf diese Weise ist oberhalb der Kappe ein Aufnahmefach zum Einlegen von kleineren Gegenständen geschaffen.

Die Kappe ist erfindungsgemäß mit einer Verliersicherung versehen. Dadurch wird verhindert, daß die Kappe bei Entfernen aus der Vertiefung verloren geht.

Bei einer Ausgestaltung der Erfindung ist die Kappe mit einem nach innen weisenden Rand versehen, der an Ecken fußförmige Ansätze aufweist, welche zur Abstützung am Boden der Vertiefung dienen.

Als Verliersicherung ist in einer Ausgestaltung der Erfindung eine Schnur an die Unterseite der Kappe angeformt mit einem Einhakabschnitt am freien Ende, der in eine Öffnung der Wandung oder am Boden der Vertiefung verliersicher einsetzbar ist.

Es kann nicht verhindert werden, daß sich unter Umständen oberhalb der Kappe Wasser ansammelt. Daher ist nach einer Ausgestaltung der Erfindung in dieser eine Öffnung vorgesehen, über welche angesammeltes Wasser in die Vertiefung abfließt. Diese hat ihrerseits eine Öffnung zum Ablassen des Wassers zum Boden hin. Vorzugsweise ist die Öffnung in der Kappe als Schlitz nahe dem Rand geformt. Dadurch kann der Schlitz gleichzeitig zum Entfernen der Abdeckung durch Anheben mit einem einfachen Werkzeug verwendet werden.

Nach einer weiteren Ausgestaltung der Erfindung ist an die Kappe an der Unterseite ein Dichtungsring angeformt, der sich dichtend an oder um den Stecker bzw. die Buchse am Boden der Vertiefung legt, wenn die Kappe in die Vertiefung eingesetzt ist. Dadurch ist die Buchse bzw. der Stecker in jedem Falle auch dann geschützt, wenn Feuchtigkeit über die Ablauföffnung in die Vertiefung eindringt.

Üblicherweise sind in dem Gehäuse des Flurförderzeugs auf der dem Bediener zugewandten Seite Instrumente angeordnet. Nach einer Ausgestaltung der Erfindung ist die Vertiefung im oberen Abschnitt einer winkelförmigen Instrumentenhaube aus Kunststoff geformt, welche in einem dem Bediener zugekehrten Teil des Gehäuses des Flurförderzeugs eingesetzt ist. Der annähernd vertikale Teil der Instrumentenhaube kann Öffnungen aufweisen zur Aufnahme von Instrumentenmodulen. Nach einer Ausgestaltung der Erfindung liegen diese Öffnungen gegenüber erhabenen seitlichen und unteren Randabschnitten des vertikalen Teils versenkt angeordnet. Mit Hilfe der erhabenen Randabschnitte wird die Instrumentenhaube verstärkt. Außerdem wird dadurch ein Schutz der Instrumentenmodule gegen mechanische Einwirkungen erhalten.

Die Erfindung wird nachfolgend anhand von Zeichnungen näher beschrieben.
Fig. 1 zeigt perspektivisch eine Instrumentenhaube mit einer Vertiefung und einer Abdeckkappe nach der Erfindung.
Fig. 2 zeigt perspektivisch die Draufsicht auf die Abdeckkappe nach Fig. 1.
Fig. 3 zeigt perspektivisch die Untersicht der Abdeckkappe nach Fig. 2.
Fig. 4 zeigt perspektivisch die Instrumentenhaube nach Fig. 1 ohne Abdeckkappe.

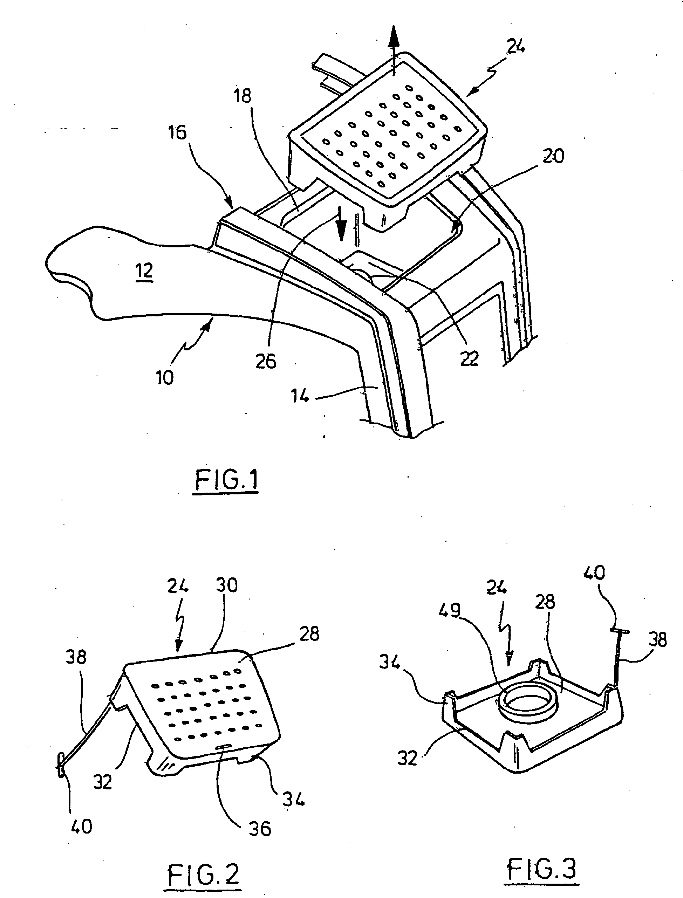

In Fig. 1 ist einer Aufnahme 10 in einen nicht weiter dargestellten Flurförderzeug angedeutet mit einer Oberseite 12 und einer vertikalen Endseite 14, welche z.B. bei einem Deichselfahrzeug der Deichsel zugeordnet ist. In einer Ausnehmung der Aufnahme ist eine Instrumentenhaube 16, die einteilig aus Kunststoff gespritzt ist, eingesetzt. In dem oberen Abschnitt der annähernd winkelförmigen Instrumentenhaube 16 ist eine Vertiefung 18 geformt. Die Vertiefung ist fachartig, und im Boden 20 der Vertiefung 18 ist eine Öffnung 22 für die Aufnahme eines Servicesteckers bzw. einer Servicesteckbuchse geformt. Der Stecker bzw. die Buchse ist auf geeignete Weise mit elektronischen bzw. elektrischen Komponenten des nicht gezeigten Flurförderzeugs verbunden.

In die Vertiefung 18 wird eine Kappe 24 eingesetzt, wie durch Pfeil 26 angedeutet. Nachfolgend wird die Kappe 24 näher beschrieben.

Die Kappe 24 ist einteilig aus einem gummielastischen Material geformt und im Querschnitt komplementär zum Querschnitt der Vertiefung 18. Sie ist so geformt, daß sie dichtend in die Vertiefung 18 eingesetzt werden kann. Die Kappe 24 besitzt einen Deckenabschnitt 28, einen oberen umlaufenden erhabenen Rand 30 und einen unteren umlaufenden erhabenen Rand 32, wobei an den Ecken fußartige Ansätze 34 geformt sind. Mit diesen sitzt die Kappe 24 auf dem Boden 20 der Vertiefung 18 auf, wenn die Kappe in die Vertiefung 18 eingesetzt ist. Im vorliegenden Fall ist die Vertiefung 18 ein gleichmäßiges Trapez. Der Umriß der Kappe 24 ist daher entsprechend geformt.

In den Deckenabschnitt 28 der Kappe 24 ist nahe einem Rand eine schlitzartige Öffnung 36 geformt. Über diese kann sich oberhalb der Kappe 24 ansammelndes Wasser in die Vertiefung darunter fließen. Es versteht sich, daß der Boden 20 der Vertiefung 18 ebenfalls eine Abflußöffnung aufweist, was jedoch nicht gezeigt ist. Mit Hilfe eines Werkzeugs kann die Kappe 24 leicht aus der Vertiefung 18 entfernt werden, indem das Werkzeug in den Schlitz 36 eingreift.

In einem Eckbereich der Kappe 24 ist eine Schnur 38 angeformt, an deren freiem Ende ein knebelartiger Verriegelungsabschnitt 40 geformt ist. Der knebelartige Abschnitt 40 wird in eine nicht gezeigte Öffnung der Wandung oder des Bodens 20 der Vertiefung 28 eingefädelt, um eine Verliersicherung für die Kappe 24 zu bilden.

An der Unterseite des Deckenabschnitts 28 ist ein Dichtungsring 49 angeformt. Dieser legt sich an oder um den Servicestecker bzw. die Servicebuchse in der Öffnung 22 der Vertiefung 18, wenn die Kappe 24 auf den Boden der Vertiefung 18 aufgesetzt wird. Dadurch wird verhindert, daß Feuchtigkeit und auch Verschmutzung in die Servicebuchse bzw. den Servicestecker eindringt.

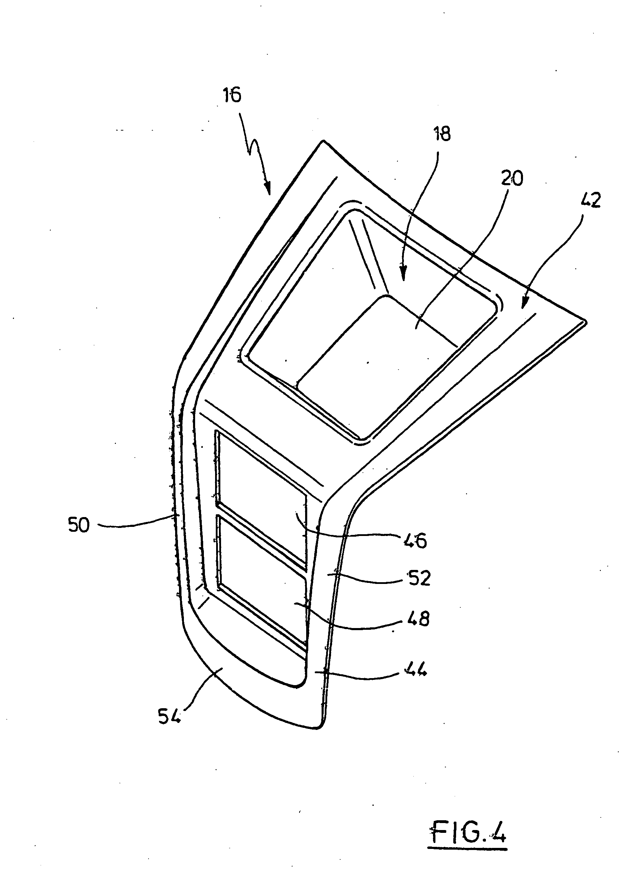

Wie schon erwähnt, ist die Vertiefung 20 in einer Instrumentenhaube 16 angeordnet. In Fig. 4 ist diese noch einmal herausgestellt, ohne daß im Boden 20 der Vertiefung 18 die Öffnung für die Aufnahme eines Servicesteckers oder einer -buchse gezeigt ist.

Man erkennt, daß die Instrumentenhaube 16 annähernd winkelförmig ist mit einem oberen annähernd horizontal verlaufenden Abschnitt 42 und einem unteren annähernd vertikal verlaufenden Abschnitt 44. Die Vertiefung 18 befindet sich im Abschnitt 42. Der vertikale Abschnitt 44 weist zwei übereinanderliegende Öffnungen 46, 48 auf für den Einschub von Instrumentenmodulen, die hier nicht gezeigt sind. Wie erkennbar, sind die Öffnungen 46, 48 zur Seite und nach unten durch erhabene Randabschnitte 50, 52 bzw. 54 begrenzt. Diese erhabenen Abschnitte 50 bis 54 bilden einen Schutz gegen äußere Einwirkungen auf die Instrumentenmodule in den Öffnungen 46, 48. Die erhabenen Randabschnitte 50, 52 erstrecken sich auch in den oberen Abschnitt 42 hinein.

## Patentansprüche

1. Anordnung eines Servicesteckers bzw. einer Servicesteckbuchse im Gehäuse eines Flurförderzeugs, wobei eine Abdeckung aus Kunststoff den Zugang zum Stecker bzw. zur Buchse bei Nichtbenutzung sperrt, **dadurch gekennzeichnet, daß** der Stecker bzw. die Buchse am Boden (20) einer fachförmigen Vertiefung (18) an einer Seite des Gehäuses (10), vorzugsweise der Oberseite, angeordnet ist und eine gummielastisch Kappe (24) vorgesehen ist, die annähernd formschlüssig die Vertiefung (18) abschließt, wobei die Kappe (24) verliersicher anbringbar ist.

2. Anordnung nach Anspruch 1, **dadurch gekennzeichnet, daß** die Kappe 24 einen nach innen in die Vertiefung (18) weisenden umlaufenden erhabenen Rand (32) mit fußförmigen Ansätzen (34) an den Ecken zur Abstützung am Boden (20) der Vertiefung (18).

3. Anordnung nach Anspruch 1 oder 2, **dadurch gekennzeichnet, daß** eine Schnur (38) an die Unterseite der Kappe (24) angeformt ist mit einem Einhakabschnitt (40) am freien Ende, der in eine Öffnung in der Wandung oder am Boden der Vertiefung (18) verliersicher einsetzbar ist.

4. Anordnung nach einem der Ansprüche 1 bis 3, **dadurch gekennzeichnet, daß** im Boden (20) der Vertiefung (18) eine Ablauföffnung für Wasser geformt ist und in der Kappe (24) ebenfalls eine Öffnung (36) zum Ablauf sich an der Oberseite der Kappe (24) ansammelnden Wassers vorgesehen ist.

5. Anordnung nach Anspruch 4, **dadurch gekennzeichnet, daß** die Öffnung (36) in der Kappe (24) als Schlitz nahe dem Rand der Kappe (24) geformt ist.

6. Anordnung nach einem der Ansprüche 1 bis 5, **dadurch gekennzeichnet, daß** die Kappe (24) an der Oberseite einen erhabenen Rand (30) aufweist.

7. Anordnung nach einem der Ansprüche 1 bis 6, **dadurch gekennzeichnet, daß** die Kappe (24) in der Vertiefung (18) versenkt angeordnet ist.

8. Anordnung nach einem der Ansprüche 1 bis 7, **dadurch gekennzeichnet, daß** an die Kappe (24) an der Unterseite ein Dichtungsring (40) angeformt ist, der sich dichtend an oder um den Stecker bzw. die Buchse legt, wenn die Kappe (24) in die Vertiefung (18) eingesetzt ist.

9. Anordnung nach einem der Ansprüche 1 bis 8, **dadurch gekennzeichnet, daß** die Vertiefung (18) im oberen Abschnitt (42) einer winkelförmige Instrumentenhaube (16) aus Kunststoff geformt ist, welche in einem dem Bediener zugekehrten Teil des Gehäuses des Flurförderzeugs eingesetzt ist.

10. Anordnung nach Anspruch 9, **dadurch gekennzeichnet, daß** in dem annähernd vertikalen Teil (44) der Instrumentenhaube (16) Öffnungen (44, 46) für die Aufnahme von Instrumentenmodulen geformt sind, wobei die Öffnungen (46, 48) gegenüber den erhabenen seitlichen und unteren Randabschnitten (50 bis 54) des vertikalen Teils (44) versenkt angeordnet sind.

## Claims

1. Assembly for a service connector or a service slide-on receptacle in the housing of an industrial truck, wherein a cover made of plastic blocks access to the connector or to the receptacle when not in use, **characterized in that** the connector or the receptacle is arranged on the floor (20) of a compartment-like recess (18) on one side of the housing (10), preferably the top side, and a rubbery-elastic cap (24) is provided, which almost closes the recess (18) in a form-fit manner, wherein the cap (24) can be attached in a loss-proof manner.

2. Assembly according to claim 1, **characterized in that** the cap 24 a circumferential, raised edge (32) pointing into the recess (18) with foot-like appendages (34) on the corners for support on the floor (20) of the recess (18).

3. Assembly according to claim 1 or 2, **characterized in that** a cord (38) is formed on the bottom side of the cap (24) with a hook-in section (40) on the free end, which can be inserted in a loss-proof manner into an opening in the wall or in the floor of the recess (18).

4. Assembly according to one of claims 1 through 3, **characterized in that** a draining opening for water is formed in the floor (20) of the recess (18) and an opening (36) is also provided in the cap (24) for the drainage of water collecting on the top side of the cap (24).

5. Assembly according to claim 4, **characterized in that** the opening (36) is formed in the cap (24) as a slit near the edge of the cap (24).

6. Assembly according to one of claims 1 through 5, **characterized in that** the cap (24) has a raised edge (30) on the top side.

7. Assembly according to one of claims 1 through 6, **characterized in that** the cap (24) is counter-sunk in the recess (18).

8. Assembly according to one of claims 1 through 7, **characterized in that** a sealing ring (40) is formed on the bottom side of the cap (24), which lies in a sealing manner on or around the connector or the receptacle when the cap (24) is inserted into the recess (18).

9. Assembly according to one of claims 1 through 8, **characterized in that** the recess (18) is formed in the upper section (42) of an angular instrument hood (16) made of plastic, which is inserted into a part of the housing of the industrial truck that faces the operator.

10. Assembly according to claim 9, **characterized in that** openings (44, 46) for receiving instrument modules are formed in the almost vertical part (44) of the instrument hood (16), wherein the openings (46, 48) are counter-sunk with respect to the raised, lateral and lower edge sections (50 through 54) of the vertical part (44).

## Revendications

1. Agencement d'un commutateur de service ou d'une fiche femelle dans le boîtier d'un chariot de manutention, dans lequel un couvercle en matière plastique bloque l'accès au commutateur ou à la fiche lorsqu'il/elle est inutilisé(e), **caractérisé en ce que** le commutateur ou la fiche est disposé(e) au fond (20) d'une cavité (18) en forme de compartiment au niveau d'une face du boîtier (10), de préférence la face supérieure, et un clapet (24) en caoutchouc élastique qui ferme la cavité (18) approximativement par engagement positif est prévu, le clapet (24) pouvant être mis en place de manière à ne pas pouvoir être perdu.

2. Agencement selon la revendication 1, **caractérisé en ce que** le clapet 24 un bord (32) périphérique dépassant tourné vers l'intérieur dans la cavité (18) avec des appendices (34) en forme de pieds aux coins pour le support au fond (20) de la cavité (18).

3. Agencement selon la revendication 1 ou 2, **caractérisé en ce qu'**un cordon (38) est formé au niveau de la face inférieure du clapet (24) avec une portion d'accrochage (40) à l'extrémité libre qui peut être introduite dans un orifice dans la paroi ou au fond de la cavité (18) de manière à ne pas pouvoir être perdue.

4. Agencement selon l'une des revendications 1 à 3, **caractérisé en ce que** dans le fond (20) de la cavité (18) est formé un orifice d'écoulement pour de l'eau et dans le clapet (24), un orifice (36) pour l'écoulement d'eau s'accumulant sur la face supérieure du clapet (24) est également prévu.

5. Agencement selon la revendication 4, **caractérisé en ce que** l'orifice (36) dans le clapet (24) est formé en tant que fente près du bord du clapet (24).

6. Agencement selon l'une des revendications 1 à 5, **caractérisé en ce que** le clapet (24) présente au niveau de la face supérieure un bord (30) dépassant.

7. Agencement selon l'une des revendications 1 à 6, **caractérisé en ce que** le clapet (24) est disposé dans la cavité (18) de manière enfoncée.

8. Agencement selon l'une des revendications 1 à 7, **caractérisé en ce qu'**un joint d'étanchéité (40), qui se place de manière étanche sur le/la ou autour du commutateur ou de la fiche lorsque le clapet (24) est introduit dans la cavité (18), est formé au niveau de la face inférieure du clapet (24).

9. Agencement selon l'une des revendications 1 à 8, **caractérisé en ce que** la cavité (18) est formée dans la portion supérieure (42) d'un capot d'instruments (16) angulaire en matière plastique, qui est introduit dans une partie du boîtier du chariot de manutention faisant face à l'utilisateur.

10. Agencement selon la revendication 9, **caractérisé en ce que** des ouvertures (44, 46) pour la réception de modules d'instruments sont formées dans la partie (44) approximativement verticale du capot d'instruments (16), les ouvertures (46, 48) étant disposées en face des portions de bord (50 à 54) dépassant latérales et inférieures de la partie verticale (44) de manière enfoncée.
